# EUROPEAN PATENT APPLICATION

(11) **EP 4 838 184 A1**
(43) Date of publication of application: **11.11.2026**
(21) Application number: 26177736.1
(22) Date of filing: 08.05.2026
(51) Int. Cl.: G01G 13/02

(54) **A SCALE FOR WEIGHING AMOUNTS OF BULK PRODUCT FOR FILLING CONTAINERS**

(30) Priority: 09.05.2025 ES 202530390
(71) Applicant: Basculas y Automatizaciones SA de CV, 11400 Miguel Hidalgo, Ciudad de Mexico (MX)
(72) Inventor: PARRAMONA I MAS, Miquel, 76090 Querétaro (Querétaro) (MX); BONET i ROSELL, Gil, E-25220 Bell-Lloc D'Urgell, Lleida (ES); CURCÓ I MASIP, Carmelo, E-25003 Lleida (ES)
(74) Representative: ABG Intellectual Property Law, S.L.

(57) **Abstract**

The invention relates to a scale (100) for weighing amounts of bulk product for filling containers, the scale (100) comprising a frame (10) supporting a belt conveyor (21) that can be driven by a motor (M1) to move product deposited on the belt surface (21a) of the belt conveyor (21) in a conveying direction (D) and in a direction towards a chute (40), where it is poured to be driven by gravity to weighing means, in which the belt conveyor (21) is operatively assembled on a movable bedplate (30) that is movable with respect to the frame (10), which fits into a space sized for that purpose in the frame (10) in which it enters and from which it can be pulled out in a guided manner and in the conveying direction (D).

## Description

### Technical Field of the Invention

The invention relates to the field of automatic gravimetric filling weighing instruments, and more specifically relates to a scale for amounts of bulk product for filling containers, for example, such as bags. The scale is of the type comprising its own means for the controlled feeding of a bulk product to be poured by gravity onto a weighing tray or directly into the container, the feeding means having at least one belt conveyor.

### Background of the Invention

To automate the dosing and filling of containers, in the form of industrial bags, for example, with particulate products in the form of powder or granulates that are stored in bulk in a feed silo or hopper, it is well-known and common practice to use net weight weighing scales and gross weight weighing scales.

Net weight weighing scales are equipped with means for dispensing or discharging doses of a specific weight of product into a container at the filling rate and with the weight accuracy required for each application. As is well known, these scales have a weighing tray prepared to weigh and discharge successive amounts of weighed product into a container.

Gross weight weighing scales dose and weigh the product directly into the container and have, as their main disadvantages with respect to net weight weighing scales, a lower packaging speed and lower precision in the effective doses of packaged product.

In any case, the scales are equipped with controlled product feeding means that act as an intermediary between the hopper and the weighing tray in one case, and between the hopper and the container in the other, combining a product conveyor and a chute. The product conveyor collects and conveys amounts of product leaving the hopper and pours them into the chute, which conducts the poured amounts by gravity to the weighing tray or the container, depending on the type of scale. Conventionally, scales also have means for mechanically adjusting the flow of product to the weighing tray or container, for example, in the form of valves that can be actuated and are located in the chute or cut-off gates that can be actuated located between the conveyor and the chute, to name a few. Patent documents EP0744597 A1, ES2220172 B1, and ES 2220173 B1 illustrate some proposals in this sense.

The type of conveyor depends on the nature of the product to be packaged and on the physicochemical characteristics thereof. To obtain the required working speeds and dosing precisions, conveyors must be capable of conveying the product at different speeds or mass flow rates. It is common to perform a first rapid loading dosing phase, with a higher mass flow rate to deliver a large amount of product in a short time, which allows reducing the total dosing and weighing time, followed by a second fine loading dosing phase, with a reduced mass flow rate to achieve the desired weight accuracy.

Scales with conveyors that are screw conveyors, vibrating trough conveyors, rotary valve conveyors, and belt conveyors are known.

Belt conveyors convey the product to the chute by means of a conveyor belt driven by an electric motor, typically with at least two conveying speeds, and are combined with a dosing gate that adjusts the height of the product deposited on the belt surface with at least two adjustment positions.

Belt conveyors are suitable for products which, given to their particular shape or physicochemical characteristics, are likely to not flow in a regular manner by gravity through a small opening, such as products in the form of cylindrical pellets, flake products, and particulate or granular products with a high moisture content, among others.

Patent document ES 2326940 B1 describes a scale with product feeding means that have a belt conveyor.

Weighing scales need to be subjected to maintenance or cleaning inspections, which is burdensome when it comes to parts of the internal circuit through which the product passes and when access to these parts must be suitable to facilitate cleaning away product residues that may have been retained, for example, in dead zones, or adhered to the surfaces with which the product has been in contact, and the fact is that scales are generally conceived as closed devices for various reasons: because they must confine the product and prevent the entry and contact of foreign elements, preventing contamination; because they must confine both the product and the powder said product may contain, for environmental, hygiene, and operator safety reasons, but also to prevent accidents such as potential explosions in the case of an explosive product or powder; and because, to comply with safety standards, it is necessary to prevent operators from accessing movable parts that could pose a danger to them. For these reasons at least, both the conveyors and the adjustment means and even the tray, depending on the type of scale, are enclosed within their respective frames and are only accessible, in part, through doors and/or manholes, which typically allow only limited and incomplete access to the interior parts through which the product circulates, hindering or directly preventing the performance of inspection, cleaning, and maintenance operations, as desired, without having to remove parts, which requires tools and time.

Proper inspection and cleaning are particularly important to prevent cross-contaminations after a production batch change; and to prevent product buildup in dead zones where the product may degrade (fermentation, rotting, insect infestation, etc.).

The drawbacks described are particularly significant in scales with a belt conveyor, as the belt in the belt conveyor is enclosed within a frame, where the dosing gate that adjusts the height of product deposited on the belt surface and the cut-off or end-of-weighing gate (or catch gate) to cut off the flow of product to the weighing tray or container are also enclosed. While it is true that, in the current state of the art, there are partial solutions for accessing the interior parts of these elements, there is no simple, effective, and robust solution on the market that allows access to said parts and their surrounding parts without having to remove the scale multiple times, which requires specific tools, skilled operators, and time to do this.

### Description of the Invention

To overcome the drawbacks of the state of the art, the invention proposes a scale according to claim 1.

The scale comprises a frame supporting weighing means; upstream of the weighing means, a chute suitable for conducting by gravity amounts of product to be weighed towards the weighing means; and upstream of the chute, at least one belt conveyor that can be driven by a motor to move product deposited on the belt surface of the belt conveyor in a conveying direction and in a direction towards the chute, where it is poured.

Essentially, the scale is characterized in that the belt conveyor is operatively assembled on a movable bedplate that is movable with respect to the frame, which fits into a space sized for that purpose in the frame in which it enters and from which it can be pulled out in a guided manner and in the mentioned conveying direction.

The position for the entry of the movable bedplate is such that it allows operating the scale in a conventional manner, with the belt conveyor being housed inside the frame and covered by the railings, walls and/or panels of the scale acting as a barrier against the entry of external elements, against the product exiting to the outside, and preventing access to the movable parts as a protection measure for the operator; meanwhile, being able to pull the movable bedplate in a guided manner out of the frame causes the dual effect of being able to readily access the parts of the belt conveyor removed from the frame and the inner parts of the scale accessible from the free space that is left by removing the movable bedplate.

As explained below, this proposal can be implemented both in net weight weighing scales and in gross weight scales, having the appropriate weighing means in each case.

In an embodiment of interest of the invention, the movable bedplate is movable without being detached from the frame of the scale between at least two stable positions, one of which is a usage position and the other is an inspection and/or cleaning position; the belt conveyor is housed entirely in the frame when the movable bedplate adopts the usage position; and the belt conveyor is removed entirely from the frame, with the entire belt surface of the belt conveyor thereby being exposed when the movable bedplate adopts the inspection and/or cleaning position.

Advantageously, in the inspection and/or cleaning position, the movable bedplate continues to be attached to the frame, for example projecting from the frame, where parts thereof may remain inside the frame, but with the entirety of the belt conveyor being arranged outside of the frame, which, as will be understood, facilitates inspection and/or maintenance tasks that must be performed on same.

In an embodiment of interest, the belt conveyor has several rollers and the movable bedplate has a structure comprising a first and a second longitudinal member between which the mentioned rollers of the belt conveyor extend in a rotatably coupled manner; and at least the first longitudinal member can be separated from the rollers when the movable bedplate adopts the inspection and/or cleaning position.

Advantageously, it will even be possible to access internal parts or components of the conveyor belt.

According to one embodiment, for the entry and pulling out of the movable bedplate of the frame in a guided manner, the scale comprises a system of guides with straight guides slidably attaching the movable bedplate to the frame, the system of guides comprising at least one guide which has a circular cross-section in one of the frame and the first longitudinal member, and in which a guide follower is slidably coupled along same in the other one of the frame and the first longitudinal member, the guide determining an axis of rotation around which the first longitudinal member can be rotated, being lowered, to separate it from the rollers.

Advantageously, by selecting a guide of this type, the first longitudinal member can be movable, without being detached from the frame, between respective operating and inspection positions.

In an embodiment of particular interest, the movable bedplate of the scale comprises an intermediate plate separably attached to the inner face of the first longitudinal member; and said intermediate plate is traversed by the axes of rotation of rollers of the belt conveyor, including among same at least support rollers of the belt, which are rotatably coupled to the mentioned first longitudinal member, said intermediate plate serving to keep said rollers associated with one another when they are separated from the first longitudinal member, where applicable, by lowering the first longitudinal member.

This ensures that, even if the first longitudinal member has been removed or lowered, the rollers that were rotatably coupled to this longitudinal member do not come apart, thereby facilitating, among others, the task of replacing the belt conveyor.

In a preferred embodiment, the drive motor of the belt conveyor is supported on the movable bedplate and accordingly moves together with the movable bedplate when the latter is inserted into or is pulled out of the frame.

Accordingly, it will not be necessary to mechanically uncouple the output shaft of the drive motor of the belt conveyor when the movable bedplate is pulled out the frame, greatly simplifying this maneuver and preventing the implementation of the invention in a scale from mechanically complicating this part of the scale.

The invention is conceived to be put into practice in a net weight scale, in which the weighing means comprise a weighing tray onto which the chute opens and which is prepared for weighing and for discharging successive amounts of weighed product in a container placed below the tray. This weighing tray can be of the type known in the state of the art.

The invention is also conceived to be put into practice in a gross weight scale, without a weighing tray, in which the weighing means comprise a balance suspended from the frame and equipped with means for securing the open container into which the chute pours the product and which is prepared for weighing successive containers filled with the product. This balance can be of the type known in the state of the art.

### Brief Description of the Drawings

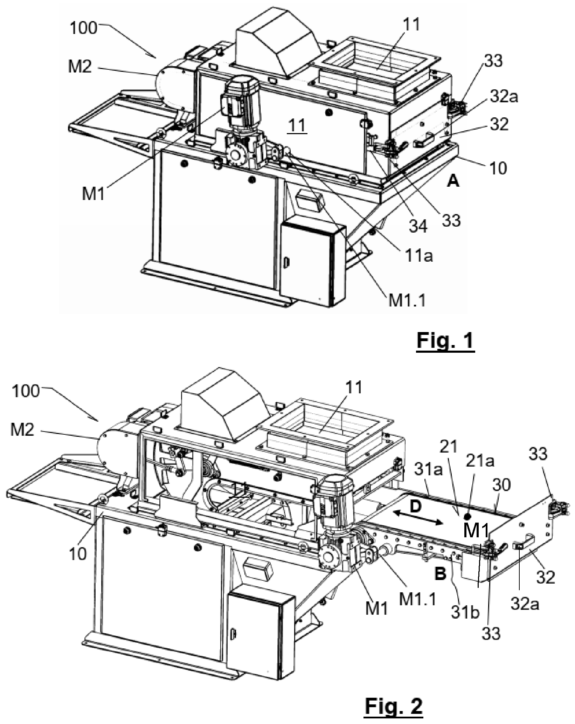

Figures 1 and 2 are respective general perspective views of a scale exemplifying the invention:
   - Figure 1, in a state of use, and
   - Figure 2, in a state of inspection and/or cleaning.
Figures 3 and 4 are respective simplified elevational views and according to respective longitudinal planes of section of the scale exemplifying the invention:

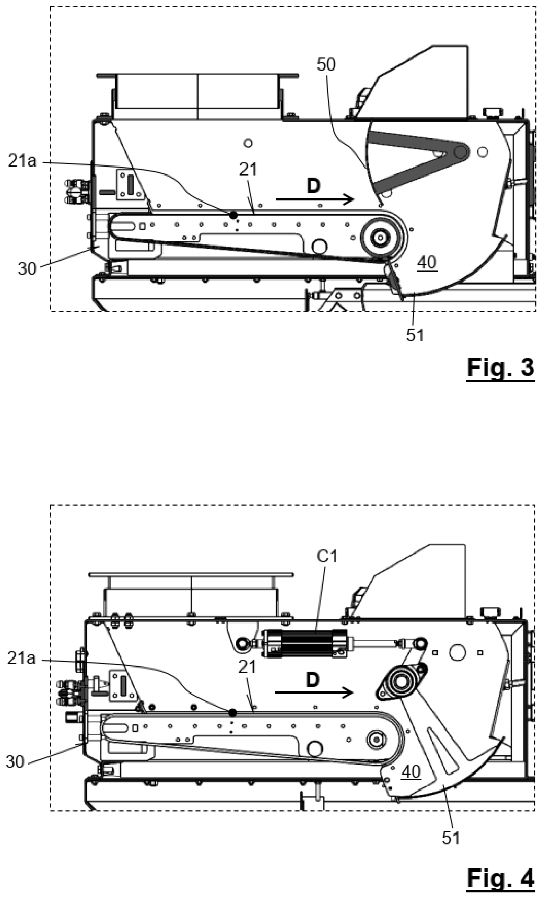

   - Figure 3, to show a dosing gate, and
   - Figure 4, to show a cut-off gate.

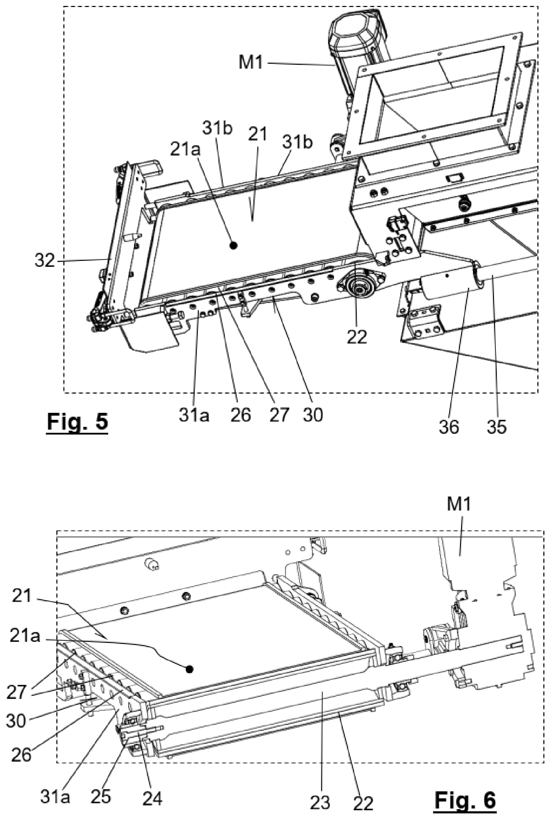

Figures 5 and 6 are respective detail perspective views of the movable bedplate with the belt conveyor, with parts and components of the scale and/or of the movable bedplate having been concealed to show aspects that would otherwise be concealed:
   - Figure 5, to show the format of one guide in a system of guides, and
   - Figure 6, which is a cross-section view coinciding with the shaft of a drive roller of the belt conveyor, to show a specific constructive solution regarding the mentioned shaft.

### Detailed Description

The drawings show a specific scale 100 exemplifying the invention.

The scale 100 exemplifying the invention is particularly suitable for the gravimetric filling of containers, such as bags, with powdery products. This scale 100 is specifically a net weight weighing scale.

The scale 100 has a frame 10 serving to support the main parts and components thereof, including, in a known manner, a weighing tray for weighing amounts of product prepared for weighing and discharging successive amounts of weighed product in a bag placed below the tray; a chute 40 (see Figures 3 and 4), which conducts by gravity the amount of product to be weighed towards the weighing tray; and means for the controlled feeding of the bulk product having a belt conveyor 21 that can be driven by a motor M1 to move product deposited on the belt surface 21a of the belt conveyor 21 in a conveying direction D in a direction towards the chute 40 where the product will be poured.

In operation, product which is served by the belt conveyor 21 and falls through the chute 40 is accumulated and weighed in the weighing tray until obtaining a target amount of product, at which time the feed is interrupted. When the system receives authorization to fill a bag placed below the weighing tray, the product dose with the target weight is discharged by means of a system of discharge gates with which the tray is equipped. When the product dose is empty, the discharge gates close again to start a new dosing and weighing cycle.

As for the weighing tray, said tray cannot be seen in the drawings and is not described in greater detail as it does not affect putting the invention into practice.

An example of a weighing tray and of how it is assembled on the frame of the scale is described by way of example in utility model ES1316901.

As for the belt conveyor 21, it is characteristic of the scale 100 to be operatively assembled on a movable bedplate 30 that is movable with respect to the frame 10, which movable bedplate 30 fits into a space sized for that purpose in the frame 10 in which the movable bedplate 30 enters and from which it can be pulled out in a guided manner and in the same conveying direction of the product.

The mentioned movable bedplate 30, taking the belt conveyor 21 with it, is movable in the example between respective usage position A, shown in Figure 1, and inspection and/or cleaning position B, shown in Figure 2.

The scale 100 of the example has several panels detachably secured to the chassis 10. These panels are shown secured to the frame 10 in Figure 1, in a usage arrangement of the scale 100, which allows illustrating how these panels contribute to forming an enclosure that encloses what takes place inside the scale 100. This enclosure is provided with an upper receiving opening 11, through which the scale 100 could communicate with, for example, a storage hopper for the product to be packaged in a bag.

When the movable bedplate 30 adopts usage position A of Figure 1, the upper opening opens onto the belt surface 21a of the belt conveyor 21, which is sized for conveying and pouring the product deposited on the belt surface 21a until it is poured into the chute 40, as shown in Figures 3 and 4.

The belt conveyor 21 of the example is a belt conveyor that has a pull roller 22 of the belt and several other rollers, including at least one deflection roller and support rollers 27 of the belt, which will be referred to in further detail below.

First it should be noted that the pull roller 22 can be driven by the motor M1 and this motor M1 is also secured to the movable bedplate 30, so the motor M1 is displaced together with the movable bedplate 30 when the latter moves between its usage position A and inspection and/or cleaning position B, as shown in Figure 2.

The perspective views of Figures 1 and 2 allow showing this feature of the scale 100, indicating with a doble arrow the direction that the movable bedplate 30 follows when it moves between the aforementioned usage position A and inspection and/or cleaning position B. This direction coincides with the direction that the belt surface 21a of the belt conveyor 21 follows when it is operated.

In the example, the motor M1 is a geared motor, preferably controlled by a variable frequency drive to be able to adjust and optimize the conveying speed in each phase of the process according to the type of product and to the production requirements and precision to be obtained, although a drive by means of a servomotor can also be contemplated.

The side panel 11, which is part of the assembly of detachable panels, can be seen in Figure 1.

The side panel 11 has at its lower edge one or more open slots extending to the lower border thereof that make it possible to remove the panel 11 in the upward direction without the output shaft M1.1 of the motor M1 coupled to the pull roller 22 of the belt conveyor 21, and in the case of the example the support attaching the motor M1 to the movable bedplate 30 as well, hindering this removal. The scale 100 of the example has two slots for the purpose, where only slot 11a can be seen in Figure 1, which is traversed by the output shaft M1.1 of the motor M1 in the usage arrangement of the scale 100.

The perspective view of Figures 1 and 2, together with the detail views of Figures 5 and 6, allow showing other features of the scale 100.

In the scale 100, the movable bedplate 30 has a structure that has a first and a second longitudinal member 31a, 31b, respectively, and a head member 32 attaching the longitudinal members 31a and 31b to one another. Though not given reference numbers in the drawings, there are auxiliary cross-members attaching the longitudinal members 31a, 31b to one another to confer greater rigidity to the structure.

The head member 32 has a handle 32a that the operator can use to pull out or move the movable bedplate 30 towards its inspection and/or cleaning position B starting from usage position A.

In the example, the head member 32 also has U-shaped clamps 33 for rapid assembly so that each one can be anchored to a complementary protrusion 34 provided for that purpose in the frame 10 or in an integral part thereof.

In the example, the structure of the movable bedplate 30 is slidably assembled on a system of guides with two straight guides 35 integral with the frame 10.

Figure 5 best shows the slidable coupling of the movable bedplate 30 to the mentioned straight guides 35. In the specific scale 100 of the example, the slidable coupling is implemented by means of two followers 36, one per guide, which have a tubular shape in the example, located at the proximal ends of the first and second longitudinal members 31a, 31b of the structure of the movable bedplate 30.

As shown in Figure 2, when the movable bedplate 30 adopts the inspection and/or cleaning position B, the latter stays in a cantilevered position relative to the frame 10, with the belt of the belt conveyor 21 being completely outside of the frame 10, obtaining full access to same to perform inspection and cleaning tasks, and also maintenance tasks, such as replacing the conveying belt, which is an arduous and burdensome task if it is to be performed when the belt remains inside the frame 10.

Figures 5 and 6 serve to show other aspects of interest of the scale 100.

Each of the straight guides 35 of the system of guides on which the movable bedplate 30 is slidably assembled, or at least that straight guide 35 on which the first longitudinal member 31a is slidably coupled, free of the motor M1, is a guide which has a circular cross-section coupled to its follower 36 with ball bushings, although the use of linear guides with friction bushings is also possible.

The selection of a circular cross-section for the guide 35 is particularly conceived to provide the first longitudinal member 31a with the capability of being lowered, rotating around the corresponding straight guide 35 and without being detached from the frame 10 in an operation for removing the belt conveyor 21 or for replacing the belt of the belt conveyor 21.

To that end, in the specific scale 100, it is intended that the mentioned first longitudinal member 31a can be detached from the head member 32 as well as from the possible cross-members also provided in the structure of the movable bedplate 30. Accordingly, these attachments are not permanent attachments, but rather are removable or detachable.

In addition to the foregoing, the rotating support of the pull roller 22 in the first longitudinal member 31a is also conceived so as not to hinder the lowering of said first longitudinal member 31a.

In fact, Figure 6 shows how the drive shaft 23 of the pull roller 22, rotatably operated by the output shaft M1.1 of the motor M1 directly or through a transmission, axially traverses the mentioned pull roller 22 to be coupled, at the outlet for rotational drive by means of an accessory element 24, such as a pin or the like, to a short support shaft 25 which is what is rotationally and tightly inserted into a hole of the first longitudinal member 31a. The removal of the accessory element 24 allows removing the short support shaft 25, the first longitudinal member 31a accordingly being able to be lowered without any major obstacle.

In addition to the foregoing, the scale 100 of the example improves on this feature by means of providing an intermediate plate 26 attached to the inner face of the first longitudinal member 31a. This intermediate plate 26 is a perforated plate, with the perforations corresponding with the number and position of the support rollers 27 of the belt of the belt conveyor 21, which perforations are traversed by the respective axes of rotation of these support rollers 27 which reach, in the example, as many other support holes or recesses formed on the inner face of the first longitudinal member 31a which are axially aligned with the perforations of the intermediate plate 26 and in which the distal ends of the axes of rotation of the support rollers 27 are rotationally and tightly inserted.

The intermediate plate 26 is attached to the inner face of the first longitudinal member 31a without these parts being attached to one another. In the example, the first longitudinal member 31a is provided with an undercut for supporting the intermediate plate 26 which is provided with a shoulder or shoulders for the support thereof in a seating or seatings provided on the first longitudinal member 31a, so that the intermediate plate 26 can rest in a manner in which it is suspended from the first longitudinal member 31a.

Advantageously, even when the first longitudinal member 31a is lowered and separated from the rollers of the belt conveyor 21, the intermediate plate 26 keeps the support rollers 27 associated with one another at their distal ends.

In a lowered position of the first longitudinal member 31a, the rollers of the belt conveyor 21 will be secured such that they are suspended from only the second longitudinal member 31b of the structure of the movable bedplate, in a projecting manner, with the set of support rollers 27, however, being associated with one another through the intermediate plate 26, helping to ensure that the belt of the belt conveyor 21 continues to be properly attached.

This solution is compatible with the provision of belt tensioning mechanisms for the belt conveyor 21, such that when they are acted on, the belt may lose tension and can be removed so that it can be replaced.

Figures 3 and 4 show other aspects of the scale 100 exemplifying the invention, specifically for illustrating its compatibility with other technical measures for better control of the product being fed to the weighing tray.

Figure 3 shows that at the outlet of the belt conveyor 21, the scale 100 has a dosing gate 50 of the height of the layer of product deposited on the belt surface 21a. This dosing gate 50 allows adopting different positions based on the phases of the feed cycle (rapid loading, slow loading, or in standby), on the features of the product to be dosed, on the number of desired weighing operations per unit of time, and on the precision required in the weighing operations obtained. In the present invention, the dosing gate 50 is preferably driven by a geared motor M2 (see Figure 1) equipped with a position coding system, although a servomotor could also be used. For the purpose of effectively limiting the angular working range of the dosing gate 50 between the minimum opening (closed position at the level of the belt surface of the belt conveyor) and the maximum opening, the dosing gate 50 is driven by means of a connecting rod-crank system, which transforms the rotational movement of the geared motor M2 into a reciprocating movement, limiting the angular arch that the dosing gate 50 can describe, thereby preventing the possible impacts of same against the belt of the belt conveyor 21 or against the enclosure of the scale 100, respectively, in the event of an error in the system for controlling the position of the geared motor.

Figure 4 shows that in the chute 40, the scale 100 has a cut-off gate 51 suitable for allowing or cutting off the passage of the product through the chute 40 towards the weighing tray, depending on the state of the dosing process, allowing the passage of the product when the belt conveyor 21 is in operation, delivering product to the weighing tray, or blocking its passage for the purpose of preventing uncontrolled product spills when the belt conveyor 21 is stopped. This cut-off gate 51 is very important in ensuring good dosing precision. The cut-off gate 51 is driven in the scale 100 of the example by means of two pneumatic cylinders C1 (only one of which can be seen in Figure 4).

## Claims

1. A scale (100) for weighing amounts of bulk product for filling containers, the scale (100) comprising a frame (10) supporting
- weighing means,
- upstream of the weighing means, a chute (40) suitable for conducting by gravity amounts of product to be weighed towards the weighing means,
- upstream of the chute (40), at least one belt conveyor (21) that can be driven by a motor (M1) to move product deposited on the belt surface (21a) of the belt conveyor (21) in a conveying direction (D) and in a direction towards the chute (40), where it is poured, the scale (100) being **characterized in that**
- the belt conveyor (21) is operatively assembled on a movable bedplate (30) that is movable with respect to the frame (10), which fits into a space sized for that purpose in the frame (10) in which it enters and from which it can be pulled out in a guided manner and in the conveying direction (D).

2. A scale (100) according to claim 1, **characterized in that** the movable bedplate (30) is movable without being detached from the frame (10) of the scale (100) between at least two stable positions, one of which is a usage position (A) and the other is an inspection and/or cleaning position (B); **in that** the belt conveyor (21) is housed entirely in the frame (10) when the movable bedplate (30) adopts the usage position (A); and **in that** the belt conveyor (21) is removed entirely from the frame (10), with the entire belt surface (21a) of the belt conveyor (21) thereby being exposed when the movable bedplate (30) adopts the inspection and/or cleaning position (B).

3. A scale (100) according to claim 2, **characterized in that** the belt conveyor (21) has several rollers (22, 27); **in that** the movable bedplate (30) has a structure comprising a first and a second longitudinal member (31a, 31b) between which the mentioned rollers of the belt conveyor (21) extend in a rotatably coupled manner; and **in that** at least the first longitudinal member (31a) can be separated from the rollers when the movable bedplate (30) adopts the inspection and/or cleaning position (B).

4. A scale (100) according to claim 3, **characterized in that** it comprises a system of guides with straight guides slidably attaching the movable bedplate (30) to the frame (10), the system of guides comprising at least one guide (35), in one of the frame (100) and the first longitudinal member (31a), having a circular cross-section and to which a guide follower (36), in the other one of the frame (10) and the first longitudinal member (31a), is slidably coupled along same, the guide (35) determining an axis of rotation around which the first longitudinal member (31a) can be rotated, being lowered, to separate it from the rollers and without being detached from the frame (10).

5. A scale (100) according to claims 3 or 4, **characterized in that** the movable bedplate (30) of the scale comprises an intermediate plate (26) separably attached to the inner face of the first longitudinal member (31a); and **in that** said intermediate plate (26) is traversed by the axes of rotation of rollers of the belt conveyor (21), including among same at least support rollers (27) of the belt, which are rotatably coupled to the mentioned first longitudinal member (31a), said intermediate plate (26) serving to keep said rollers associated with one another when the first longitudinal member (31a) is separated from same, where applicable, by lowering the first longitudinal member (31a).

6. A scale (100) according to any one of the preceding claims, **characterized in that** the drive motor (M1) of the belt conveyor (21) is supported on the movable bedplate (30) and accordingly moves together with the movable bedplate (30) when the latter is inserted into or is pulled out of the frame (10).

7. A scale (100) according to any one of the preceding claims, **characterized in that** it is a net weight scale, in which the weighing means comprise a weighing tray onto which the chute (40) opens and which is prepared for weighing and for discharging successive amounts of weighed product in a container placed below the tray.

8. A scale (100) according to any one of the preceding claims, **characterized in that** it is a gross weight scale, without a weighing tray, in which the weighing means comprise a balance suspended from the frame (10) and equipped with means for securing the open container into which the chute (40) pours the product and which is prepared for weighing successive containers filled with the product.
